# EUROPÄISCHE PATENTSCHRIFT

(11) **EP 0 505 386 B1**
(45) Veröffentlichungstag und Bekanntmachung des Hinweises auf die Patenterteilung: **19.04.1995**
(21) Anmeldenummer: 90917558.0
(22) Anmeldetag: 29.11.1990
(51) Int. Cl.: H01L 41/09, H02K 7/065

(54) **SCHRITTMOTOR ZUM ANTRIEB EINES KÖRPERS, INSBESONDERE EINER WELLE, UM KLEINE DREHWINKEL PRO SCHRITT**
STEPPING MOTOR TO DRIVE A BODY, ESPECIALLY A SHAFT, THROUGH SMALL ANGLES OF ROTATION PER STEP
MOTEUR PAS A PAS POUR L'ENTRAINEMENT D'UN CORPS, EN PARTICULIER D'UN ARBRE, PAR PETITS ANGLES DE ROTATION PAR PAS

(30) Priorität: 16.12.1989 DE 3941652
(43) Veröffentlichungstag der Anmeldung: 30.09.1992
(73) Patentinhaber: TELDIX GmbH, D-69046 Heidelberg (DE)
(72) Erfinder: HETTLAGE, Eckart, D-7500 Karlsruhe (DE); RUFF, Gerd, D-6900 Heidelberg 1 (DE); ECKART, Thomas, D-6900 Heidelberg (DE)
(74) Vertreter: Wiechmann, Manfred, Dipl.-Ing.
(86) Internationale Anmeldenummer: EP9002054
(87) Internationale Veröffentlichungsnummer: WO9109428

(56) Entgegenhaltungen:
- EP-A- 0 112 454
- EP-A- 0 166 499

## Beschreibung

Die Erfindung betrifft einen Schrittmotor zum Antrieb eines Körpers, insbesondere einer Welle, um kleine Drehwinkel pro Schritt mit den Merkmalen des Oberbegriffs des Patentanspruchs 1.

Es gibt zahlreiche Ausführungen von Schrittmotoren, auch mit sehr kleinen Schritten (siehe beispielsweise EP-A-0 112 454).

Vielfach werden dafür Untersetzungsgetriebe in den unterschiedlichsten Formen verwendet. Getriebe haben meist den Nachteil, daß sie bei Ausfall des Motors den Antrieb blockieren und, mit einigen Ausnahmen, schwer Redundanz zulassen.

Ein weiterer Nachteil von Getrieben ist der Herstellungsaufwand sowie das immer notwendige Getriebespiel, welches Schritte in sehr kleinen Winkelbereichen unmöglich macht.

### Aufgabe

Aufgabe der Erfindung ist es, einen Schrittmotor zum Antrieb eines Körpers, insbesondere einer Welle, um kleine Drehwinkel pro Schritt zu schaffen, bei dem die genannten Nachteile vermieden werden.

Diese Aufgabe wird durch die im kennzeichnenden Teil des Anspruchs 1 angegebenen Merkmale gelöst. Vorteilhafte Ausgestaltungen der Erfindung ergeben sich aus den Unteransprüchen und aus der Beschreibung.

### Beschreibung

Der erfindungsgemäße Schrittmotor erlaubt es, große Momente in sehr kleinen Schritten auf einen zu drehenden Körper, insbesondere auf eine Welle, zu übertragen. Die Schrittfolge ist dabei relativ langsam. Für die Feststellung der genauen momentanen Stellung des Körpers, bzw. der Welle, kann ein Enkoder verwendet werden.

Der erfindungsgemäße Schrittmotor enthält einen Stator, einen einen Körper verdrehenden Rotor und einen auf den Rotor einwirkenden Antrieb. Zwischen dem Rotor und dem Stator ist wenigstens ein der Verdrehung dieser Teile gegeneinander entgegenwirkendes Federelement vorgesehen. Unter Rotor ist hier ein Ring mit mindestens zwei Federlementen und ebenfalls am Ring angeordneten, aktiv beweglichen, Elementen (Verbindungen) zu verstehen, die zur Bewegung des Körpers aus einer Ausgangsstellung heraus mit dem Körper verbunden werden. Für den Stator ergibt sich ein ähnlicher Aufbau. Gemeinsam mit der Verbindung des Rotors zum Körper wird der Antrieb zur Durchführungeines Drehschritts angesteuert. Nach der Durchführung des Drehschritts und überlappend zur Ansteuerung der Verbindung des Rotors zum Körper, wird der Stator mit dem Körper verbunden, um den Körper in der erreichten Stellung zu halten.

Zwei konzentrisch zueinander und zum Körper angeordnete Ringe sind über ein, eine große axiale Steifigkeit bei gleichzeitig großer tangentialer Flexibilität aufweisendes, Federelement miteinander verbunden. Einer der beiden Ringe ist fest mit dem Stator verbunden.

Auf der von dem Körper abgewandten Außenseite der beiden Ringe ist an jedem Ring mindestens ein Arm vorgesehen. Beide Arme sind an ihren Enden über ein flexibles Verbindungsstück miteinander verbunden. Das Verbindungsstück ist radial zum Körper verbiegbar, z. B. durch ein Piezoelement oder durch einen Elektromagneten.

In einer erfindungsgemäßen Ausführung sind auf der dem Körper, bzw. der Welle, zugewandten Innenseite der beiden Ringe jeweils mindestens zwei aktiv bewegliche Verbindungen mit den Ringen fest verbunden. Die freien Enden der Verbindungen sind der Oberfläche der Welle angepaßt und zur besseren Kraftübertragung poliert. Auf den beweglichen Verbindungen ist jeweils wenigstens ein Piezoelement angeordnet. Wird das Piezoelement der beweglichen Verbindung des nicht mit dem Stator verbundenen Rings angesteuert, legen sich die beweglichen Verbindungen an die Welle an. Überlappend zu der Ansteuerung des Piezoelements auf den beweglichen Verbindungen wird das Piezoelement, bzw. der Elektromagnet, auf dem flexiblen Verbindungsstück angesteuert. Durch eine dadurch hervorgerufene Verbiegung des Verbindungsstücks, bewegt sich der nicht mit dem Stator verbundene Ring und damit die über die beweglichen Verbindungen mit dem Ring verbundene Welle entgegen der Wirkung des Federelements und des sich am Stator abstützenden zweiten Rings um einen kleinen Drehschritt in eine Richtung. Die Drehrichtung ist abhängig vom Piezoelement bzw. von der Ansteuerung des Piezoelements. Die Größe des Drehwinkels pro Schritt von der an das Piezoelement bzw. an den Elektromagneten angelegten Spannung.

Nach der Durchführung des Schritts werden die Piezoelemente der beweglichen Verbindungen des mit dem Stator verbundenen Rings angesteuert und die beweglichen Verbindungen mit der Welle verbunden. Sie halten so die Welle in der erreichten Stellung fest. Nach Abschalten der Spannung der zuerst angesteuerten Piezoelemente lösen sich die beweglichen Verbindungen von der Welle und der nicht mit dem Stator verbundene Ring wird durch das Federelement in die Ausgangsstellung zurückbewegt. Der nächste Schritt wird eingeleitet, indem die Piezoelemente der beweglichen Verbindungen des nicht mit dem Stator verbundenen Rings, sowie das Piezoelement, bzw. der Elektromagnet, auf dem flexiblen Verbindungsstück angesteuert werden und die Spannung der auf den beweglichen Verbindungen des mit dem Stator verbundenen Rings befindlichen Piezoelemente abgeschaltet wird.

In einer weiteren erfindungsgemäßen Ausführung weisen die einander entgegengesetzt gerichteten beiden axialen Enden der Ringe jeweils wenigstens einen Elektromagneten auf. Am Körper, bzw. an der Welle, ist an einem federnden Teil ein ferromagnetisches Teil befestigt, das dem Elektromagneten gegenübersteht. Die eine Nut aufweisenden Enden der Ringe bestehen wenigstens zum Teil aus einem ferromagnetischen Material. In die Nut der beiden Ringe ist jeweils wenigstens eine Ringwicklung angeordnet, die zusammen mit dem ferromagnetischen Material Elektromagnete bilden. Das am Körper, bzw. an der Welle, über ein federndes Teil befestigte ferromagnetische Teil, bildet den beweglichen Teil des Elektromagneten. Auch bei dieser erfindungsgemäßen Ausführung ist wieder ein Ring fest mit dem Stator verbunden. Das flexible Verbindungsstück ist genauso angeordnet, wie in der ersten erfindungsgemäßen Ausführung bereits beschrieben. Auf das Verbindungsstück kann entweder ein Elektromagnet einwirken, der eine Verbiegung des Verbindungsstücks hervorruft, oder es ist auch hier wieder ein Piezoelement angeordnet.

Zur Durchführung eines Drehschritts werden statt der im ersten Ausführungsbeispiel genannten Piezoelemente, die entsprechenden Elektromagnete angesteuert.

Die einander entgegengesetzt gerichteten Enden der Ringe können in einem weiteren Ausführungsbeispiel Joche aufweisen, auf denen Wicklungen zur Bildung eines Elektromagneten aufgebracht sind. Die einander entgegengesetzt gerichteten Enden bestehen auch hier wieder wenigstens zum Teil aus ferromagnetischem Material.

Bei einem weiteren Ausführungsbeispiel sind die wenigstens zum Teil aus ferromagnetischem Material bestehenden Enden der Ringe u-förmig ausgebildet. Auf wenigstens einem Schenkel der u-förmigen Ringe ist wenigstens eine Wicklung zur Bildung eines Elektromagneten angeordnet.

Den axial beweglichen Teil des Elektromagneten kann bei den letzten beiden Ausführungsbeispielen jeweils ein über ein federndes Teil oder einer membranartigen Scheibe am Körper, bzw. an der Welle, befestigtes ferromagnetisches Teil bilden.

Die die beiden Ringe miteinander verbindenden Federelemente weisen in axialer Richtung eine große Steifigkeit auf, während sie in tangentialer Richtung sehr flexibel sind. Die große Steifigkeit und die große Flexibilität der Federelemente ergeben sich aus ihren Abmessungen in diesen Richtungen. Die große Flexibilität wird gefordert, weil die Federelemente eine möglichst konstante Federkraft in tangentialer Richtung erzeugen müssen, gegen die die Ringe zur Durchführung eines Drehschritts verstellt werden und die den nicht mit dem Stator verbundenen Ring, nach Durchführung des Drehschritts, wieder in die ursprüngliche Ausgangsstellung zurückstellt.

Zur variablen Schrittweite können die auf dem Verbindungsstück angeordneten Piezoelemente, bzw. der auf das Verbindungsstück einwirkende Elektromagnet, mit einer variablen Spannung angesteuert werden.

Bei einem weiteren Ausführungsbeispiel des Schrittmotors sind am Körper und an den Ringen sich überlappende membranartige Teile aus ferromagnetischem Material angeordnet, die durch auf den Ringen befindliche Magnete axial bewegt werden und dadurch im einander überlappenden Bereich feste, zur Kraftübertragung geeignete, Verbindungen darstellen.

Durch diese Anordnung läßt sich auch ein außerhalb der Ringe liegender Körper, z. B. ein Hohlkörper, gegenüber einer feststehenden Welle verdrehen. Dazu werden die beweglichen Verbindungen außerhalb der Ringe und das flexible Verbindungsstück innerhalb der Ringe angeordnet. Ein Ring ist fest mit der feststehenden Welle verbunden.

Der Ansteuervorgang und der Bewegungsablauf erfolgen so wie bereits beschrieben.

### Figurenbeschreibung

Die Erfindung wird anhand der Zeichnung in der nachfolgenden Beschreibung näher erläutert.

Es zeigen:
- Fig. 1: den prinzipiellen Aufbau des Schrittmotors im axialen Schnitt,
- Fig. 2: ein Ausführungsbeispiel des Schrittmotors in einer perspektivischen Darstellung, ohne Welle,
- Fig. 3: ein weiteres Ausführungsbeispiel des Schrittmotors in einer perspektivischen Darstellung, ohne Welle,
- Fig. 4: ein weiteres Ausführungsbeispiel des Schrittmotors im axialen Schnitt,
- Fig. 5: eine prinzipielle Darstellung der Ringe mit den Federelementen,
- Fig. 6: ein Diagramm,
- Fig. 7: ein weiteres Ausführungsbeispiel des Schrittmotors im axialen Schnitt,
- Fig. 8: eine Weiterbildung des in Fig. 7 dargestellten Ausführungsbeispiels im axialen Schnitt,
- Fig. 9: ein Diagramm,
- Fig. 10: ein Ausführungsbeispiel einer Ansteuerschaltung einer Anordnung nach Fig. 8,
- Fig. 11: die Weiterbildung gemäß Fig. 8 in einer Draufsicht.

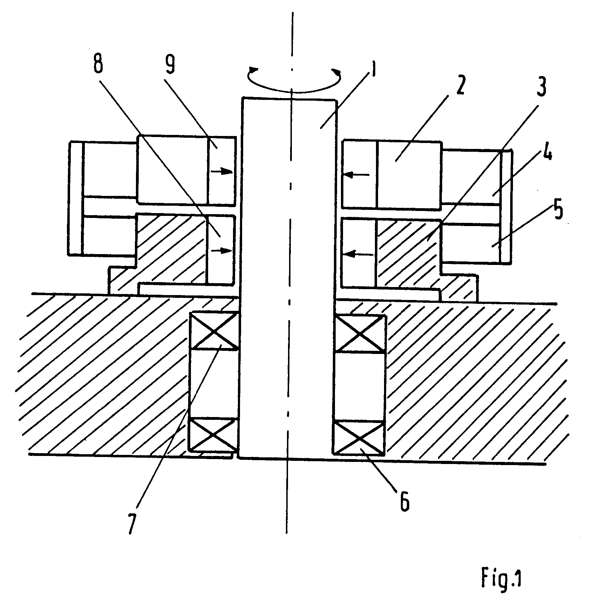

Die Figur 1 zeigt den prinzipiellen Aufbau des Schrittmotors in einer axialen Schnittdarstellung. Mit 1 ist die über die Lager 6, 7 am Stator frei drehbar gelagerte Welle bezeichnet. Der Stator ist mit dem Ring 3 fest verbunden. Die Ringe 2, 3 sind durch Federelemente 4, 5 miteinander verbunden. Auf der der Welle 1 zuwandten Seite der Ringe 2, 3 sind die jeweils mindestens zwei, aktiv beweglichen, Verbindungen 8, 9 des Stators zur Welle 1 bzw. des Rotors zur Welle 1 angeordnet.
Unter Rotor ist der Ring 2 zusammen mit den die Welle 1 verdrehenden beweglichen Verbindungen 9 zu verstehen.

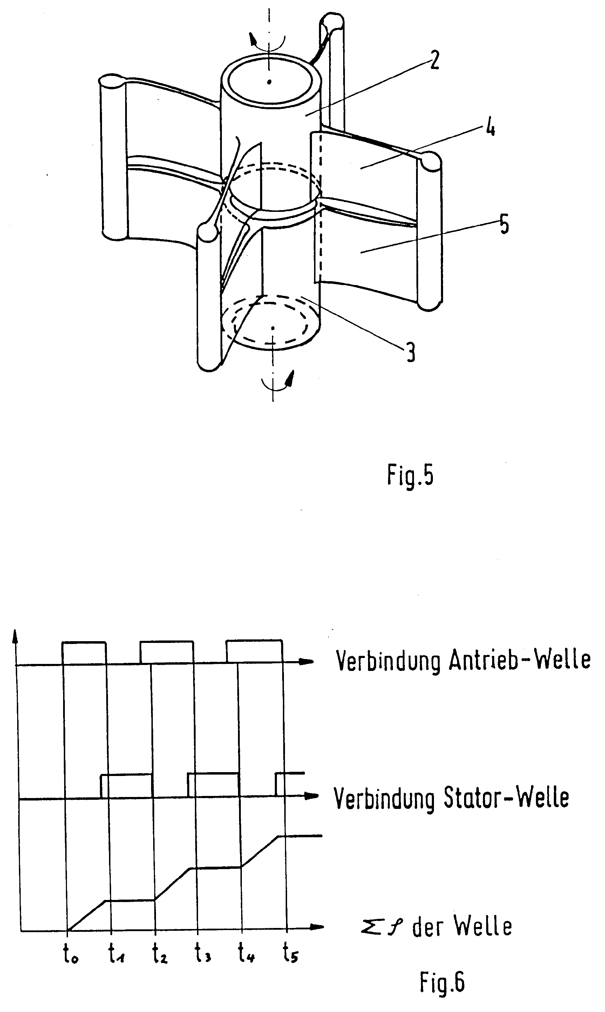

Zur Durchführung eines Drehschritts werden zum Zeitpunkt t₀ (Fig. 6) die beweglichen Verbindungen 9 am Ring 2 mit Spannung versorgt. Die beweglichen Verbindungen 9 legen sich an die Welle 1 an. Etwas zeitverzögert wird das flexible Verbindungsstück 12 (nicht dargestellt) angesteuert und verdreht die Welle 1 gegen die Federkraft der Federelemente 4, 5 in eine Richtung. Nach der Durchführung des Drehschritts werden, etwas vor dem Zeitpunkt t₁, die beweglichen Verbindungen 8 des Stators zur Welle 1 angesteuert. Die beweglichen Verbindungen 8 legen sich an der Welle 1 an. Nachdem die beweglichen Verbindungen 8 Kontakt zur Welle 1 haben, werden zum Zeitpunkt t₁ die beweglichen Verbindungen 9 des Rotors zur Welle 1 abgeschaltet. Die beweglichen Verbindungen 8 des Stators zur Welle 1 halten die Welle 1 bis zum nächsten Schritt in der erreichten Stellung. Der nächste Schritt beginnt damit, daß etwas vor dem Zeitpunkt t₂ die beweglichen Verbindungen 9 des Rotors zur Welle 1 angesteuert werden.

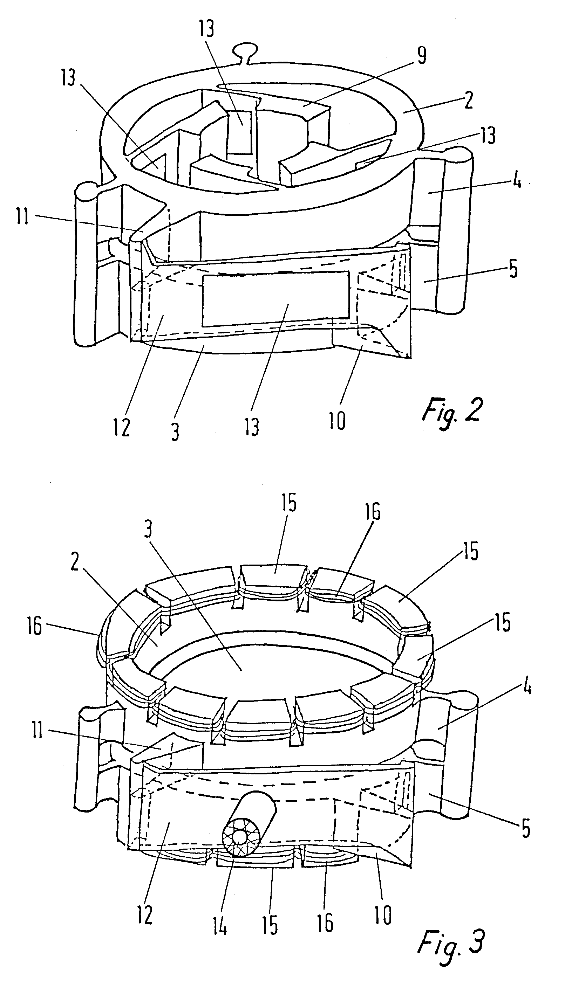

Die Figur 2 zeigt ein Ausführungsbeispiel des Schrittmotors in einer perspektivischen Darstellung, ohne Welle. Die Ringe 2, 3 sind über die Federelemente 4, 5 miteinander verbunden. An den Ringen 2, 3 sind Arme 10, 11 befestigt, die an ihren Enden über das flexible Verbindungsstück 12 miteinander verbunden sind. Innerhalb der Ringe 2, 3 sind die beweglichen Verbindungen 8, 9 angeordnet. Die freien Enden der beweglichen Verbindungen 8, 9 sind der Oberfläche der Welle (nicht dargestellt) angepaßt. Auf der Vorder- und der Rückseite der beweglichen Verbindungen 8, 9 und auf dem flexiblen Verbindungsstück 12 sind Piezoelemente 13 angeordnet.

Auf das flexible Verbindungsstück 12 kann selbstverständlich auch ein Elektromagnet oder ein sonstiger Antrieb einwirken.

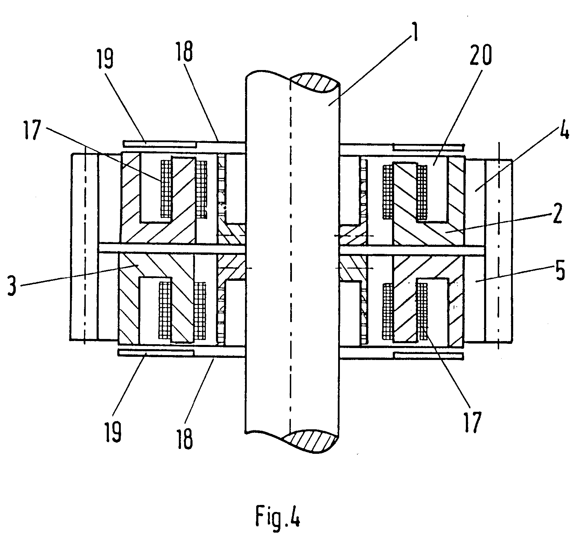

Die Figur 3 zeigt ein weiteres Ausführungsbeispiel des Schrittmotors in einer perspektivischen Darstellung, ohne Welle. Die einander entgegengesetzt gerichteten axialen Enden der Ringe 2, 3 sind jochförmig ausgebildet. Auf den Jochen 15 sind Wicklungen 16 angeordnet. Zur Bildung von Elektromagneten sind die Ringe 2, 3 wenigstens teilweise aus ferromagnetischem Material. Auf das flexible Verbindungsstück 12 wirkt ein Elektromagnet 14 ein. Die Verbindung des Rotors zur Welle bzw. des Stators zur Welle wird, wie in Fig. 4 dargestellt, über wenigstens jeweils ein, den beiden Ringen 2, 3 axial gegenüberstehendes, an der Welle befestigtes, federndes Teil 18 und dem ferromagnetischen Teil 19 oder über jeweils eine, den beiden Ringen 2, 3 axial gegenüberstehende membranartige Scheibe und einem ferromagnetischen Teil hergestellt.

Figur 4 zeigt ein weiteres Ausführungsbeispiel des Schrittmotors in einer axialen Schnittdarstellung. Die einander entgegengesetzt gerichteten axialen Enden der wenigstens zum Teil aus ferromagnetischem Material bestehenden Ringe 2, 3 sind u-förmig ausgebildet. Auf dem der Welle 1 zugewandten Schenkel der u-förmigen Ringe 2, 3 ist jeweils eine Wicklung 17 angeordnet. In einer weiteren Ausführungsform des Schrittmotors sind die Wicklungen in der Nut 20 als Ringwicklung angeordnet. In dem in Fig. 4 dargestellten Ausführungsbeispiel sind an der Welle 1, den u-förmigen Ringen 2, 3 gegenüberliegend, über wenigstens ein federndes Teil 18 oder über eine membranartige Scheibe ferromagnetische Teile 19 befestigt, die als bewegliche Teile, bzw. als Rückschlußelemente der Elektromagneten dienen. Auch bei diesem Ausführungsbeispiel ist wieder ein Ring, z. B. Ring 3, fest mit dem Stator verbunden.

Das flexible Verbindungsstück 12 ist bei diesem Ausführungsbeispiel ebenso angeordnet, wie es Fig. 3 zeigt. Auf dem flexiblen Verbindungsstück 12 ist auch wieder wenigstens ein Piezoelement 13 angeordnet oder ein Elektromagnet 14 erzeugt die Verbiegung des Verbindungsstücks 12.

Zur Durchführung eines Drehschritts wird der Elektromagnet des nicht mit dem Stator verbundenen Rings 2 zum Zeitpunkt t₀, Fig. 6, angesteuert. Durch das Anziehen des beweglichen Teils 18, 19 des Elektromagneten wird eine Verbindung zwischen dem Ring 2 und der Welle 1 hergestellt. Etwas zeitverzögert zu der Ansteuerung des auf dem Ring 2 angeordneten Elektromagneten wird der auf das flexible Verbindungsstück 12 einwirkende Elektromagnet 14, bzw. das auf dem flexiblen Verbindungsstück 12 befindliche Piezoelement 13 (nicht dargestellt) angesteuert. Durch die dadurch hervorgerufene Verbiegung des Verbindungsstücks 12 verdreht sich die Welle 1 gegen die Federkraft der Federelemente 4, 5 in eine Richtung. Nach der Durchführung des Drehschritts wird etwas vor dem Zeitpunkt t₁ der Elektromagnet des mit dem Stator verbundenen Rings 3 angesteuert. Durch das Anziehen des beweglichen Teils 18, 19 dieses Elektromagneten, wird eine Verbindung zwischen dem Ring 3 und der Welle 1 hergestellt und die Welle 1 in der erreichten Stellung gehalten. Nach Abschalten der Spannung des zuerst angesteuerten Elektromagneten zum Zeitpunkt t₁, schwingt das entsprechende bewegliche Teil 18, 19 des Elektromagneten 17 in die Ausgangsstellung zurück und der nicht mit dem Stator verbundene Ring 2 wird durch die Federkraft der Federelemente 4, 5 in die Ausgangsstellung zurückbewegt.
Der nächste Schritt wird eingeleitet, indem der Elektromagnet des nicht mit dem Stator verbundenen Rings 2 etwas vor dem Zeitpunkt t₂ und wieder etwas zeitverzögert dazu der auf das flexible Verbindungsstück 12 einwirkende Elektromagnet 14, bzw. das auf dem flexiblen Verbindungsstück 12 befindliche Piezoelement 13, angesteuert werden und der Elektromagnet des mit dem Stator verbundenen Rings 3 zum Zeitpunkt t₂ abgeschaltet wird.

Die Figur 5 zeigt eine prinzipielle Darstellung der Ringe 2, 3 mit den Federelementen 4, 5.

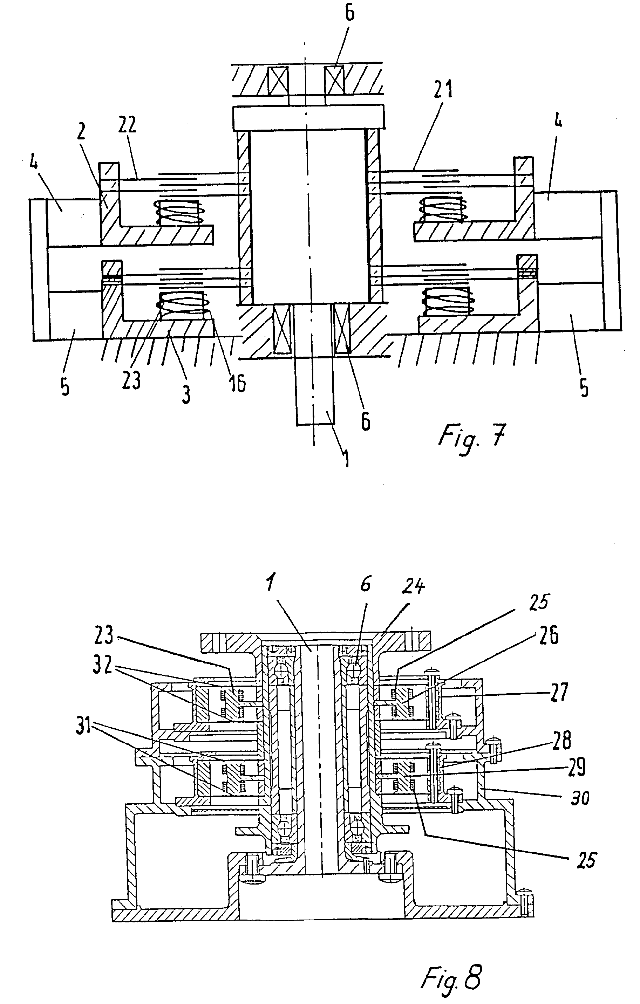

In Fig. 7 ist ein weiteres Ausführungsbeispiel eines erfindungsgemäßen Schrittmotors im axialen Schnitt dargestellt. Bei diesem Ausführungsbeispiel sind axiale versetzt L-förmige Ringe 2, 3 mit den Federelementen 4, 5 verbunden. Ring 3 ist fest am Gehäuse montiert. Auf den Ringen 2, 3 sind Joche 23 mit Wicklungen 16 angeordnet. Die Ringe 2, 3 tragen ferromagnetische axial elastische Ringe 22 die zusammen mit an der Welle 1 befestigten ferromagnetischen membranartigen Scheiben 21, den Wicklungen 16 und den Jochen 23 einen Elektromagneten bilden. Hierzu sind die Ringe 22 und die Scheiben 21 einander im Bereich des Jochs 23 überlappend ausgelegt. Durch ein Magnetfeld werden sie zusammengepreßt und bilden als Stapel einen ausreichend dicken magnetischen Rückschluß.

Da das Membranpaket, bestehend aus den Scheiben 21 und den Ringen 22, aus abwechselnd mit dem Körper bzw. mit der Welle 1 verbundenen Scheiben 21 und mit den Jochringen 2,3 verbundenen Ringen 22 gebildet werden, gewährleisten sie als Gesamtes eine starke, für eine Kraftübertragung ausreichende, Haftreibung.

Im magnetfeldfreien Zustand lösen sich die Scheiben 21 und die Ringe 22 leicht voneinander und geben die Welle 1 frei. Eine geringe gegenseitige Berührung wirkt sich kaum als Reibung aus. Selbstverständlich können die Jochringe 2, 3 auch so angeordnet sein, daß sich die Joche 12 mit den Wicklungen 16 und dem Membranpaket einander gegenüberstehen.

Die Fig. 8 zeigt eine Weiterbildung des in Figur 7 dargestellten Ausführungsbeispiels. Diese Anordnung besteht aus zwei Antrieben 25, 26, 27, 32; 25, 28, 29, 31 die axial versetzt, koaxial zur Welle 1, angeordnet sind. Die einzelnen Antriebe setzen sich im wesentlichen zusammen aus T-förmig ausgebildeten Jochringen 26, 29, aus den die in den vorn beschriebenen Beispielen verwendeten Federelemente 4, 5 ersetzenden Torsionsringen 27, 28 und aus den Membranpaketen 31, 32. Die langen Schenkel der T-förmig ausgebildeten Jochringe 26, 29 sind an der Welle 1 befestigt. Die kurzen Schenkel des T sind jeweils als Joch 23 ausgebildet und tragen die Wicklungen 25. Zusammen mit den Membranpaketen 31, 32 bilden die Joche 23 und die Wicklungen 25 Elektromagente, die im angezogenen Zustand einmal eine feste Verbindung zwischen der Welle 1 und dem Antrieb 25, 26, 27, 32; 25, 28, 29, 31 oder zwischen dem Gehäuse 30 und dem Antrieb 25, 26, 27, 32; 25, 28, 29, 31 darstellen.

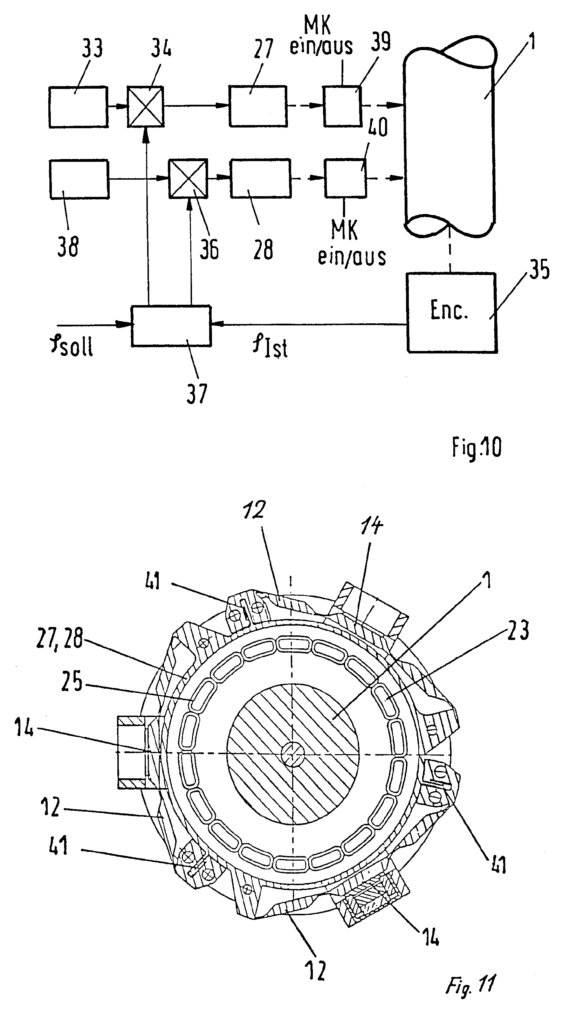

In dieser Figur ist mit der Bezugszahl 6 die Lagerung und mit der Bezugszahl 24 der Flansch für den Abtrieb bezeichnet. Durch diesen doppelten Antrieb 25, 26, 27, 32 und 25, 28, 29, 31 wird, bei geeigneter Ansteuerung, beispielsweise nach Fig. 10, eine kontinuierliche Drehung der Welle 1 erreicht.

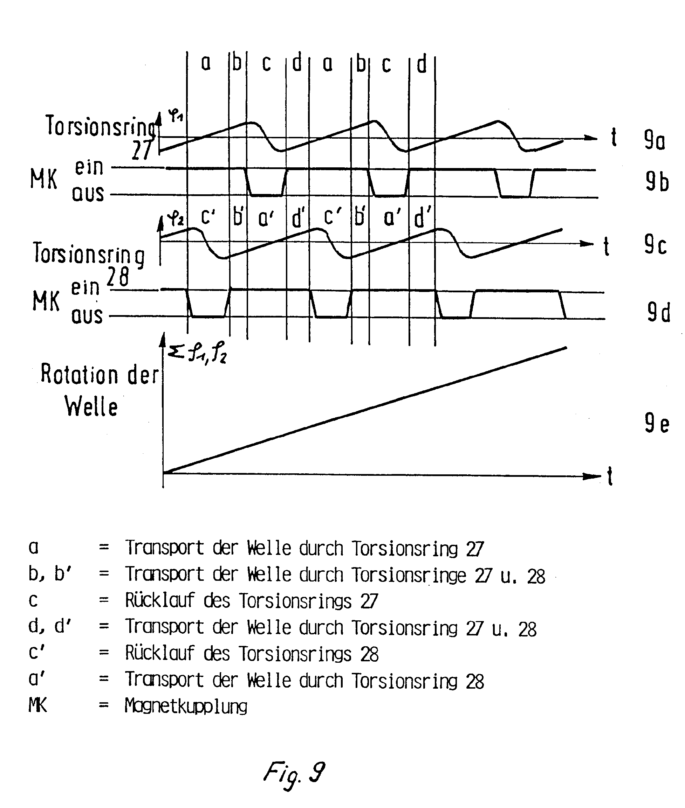

Die Arbeitsweise der Anordnung nach Fig. 8 zeigt das Diagramm der Fig. 9.

In den Fig. 9a und 9b wird die Zusammenarbeit des Torsionsrings 27 mit der Magnetkupplung MK, bestehend aus der Wicklung 25, dem Jochring 26 und dem Membranpaket 32, dargestellt. Die Fig. 9c und 9d zeigen die Zusammenarbeit des Torsionsrings 28 mit der Magnetkupplung MK, bestehend aus der Wicklung 25, dem Jochring 29 und dem Membranpaket 31.

Der Torsionsring 27 wird so angesteuert, daß er eine Bewegung entsprechend der Fig. 9a ausführt. Mit der langsam ansteigenden Flanke (Zeiträume d, a, b) bewegt sich der Torsionsring 27 um einen kleinen Winkel in eine Richtung. Während der steil abfallenden Flanke (Zeitraum c) wird der Torsionsring 27 in seine Ausgangsstellung zurückbewegt. Der Fig. 9b ist zu entnehmen, daß der Torsionsring 27 während der langsam ansteigenden Flanke (Fig. 9a) (Zeiträume d, a, b) mit der Welle 1 verbunden ist (Magnetkupplung MK ein) und damit die Welle 1 um einen kleinen Winkel verdreht.

Im Zeitraum c wird die Verbindung Torsionsring 27 und Welle 1 gelöst (Magnetkupplung MK aus).

Die Fig. 9c und 9d zeigen den gleichen Vorgang mit dem Torsionsring 28 und der Magnetkupplung MK 25, 29, 31. Der Torsionsring 28 bewegt sich während der Zeiträume b′, a′, d′ um einen kleinen Winkel in die gleiche Richtung in die sich der Torsionsring 27 während der Zeiträume d, a, b (Fig. 9a) bewegt hat. Auch der Torsionsring 28 wird während der steil abfallenden Flanke (Zeitraum c') in seine Ausgangsstellung zurückbewegt. Die Magnetkupplung MK, bestehend aus der Wicklung 25, dem Jochring 29 und dem Membranpaket 31, hat während der Zeiträume b′, a′, d′ die Verbindung zwischen dem Torsionsring 28 und der Welle 1 hergestellt. Damit ist die Welle 1 wieder um einen kleinen Winkel verdreht worden.

Durch die Zusammenfügung der beiden Verdrehungen entsprechend den Fig. 9a und 9b ergibt sich durch den überlappenden Antrieb der Welle 1 durch die beiden Torsionsringe 27, 28 in den Zeiträumen b, b′ und d, d′ eine kontinuierliche Bewegung der Welle 1 entsprechend der Fig. 9e.

Während des Zeitraumes a übernimnt der Torsionsring 27 den Transport der Welle 1, während der Torsionsring 28, durch die vorhandene Federkraft, in die Ausgangsstellung zurückgezogen wird (Zeitraum c′). In den Zeiträumen b und b′ sind beide Torsionsringe 27, 28 mit der Welle 1 verbungen und tragen beide zur Verdrehung der Welle 1 bei. Während des Zeitraumes c bewegt sich der Torsionsring 27 in seine Ausgangsstellung zurück und der Torsionsring 28 übernimmt den Transport der Welle 1 (Zeitraum a'). In den Zeiträumen d und d' tragen wieder beide Torsionsringe 27 und 28 zur Drehung der Welle 1 bei. Diese Bewegungsabläufe wiederholen sich. Durch eine entsprechende Änderung der Ansteuerung der Torsionsringe 27, 28 läßt sich die Drehrichtung der Welle 1 umdrehen.

Die Fig. 10 zeigt ein Ausführungsbeispiel der Ansteuerung einer Anordnung nach Fig. 8.

Die momentane Position der Welle 1 wird durch einen Encoder 35 sensiert. Der Encoder 35 gibt ein der momentanen Position der Welle 1 entsprechendes Signal φ_{Ist} an einen Vergleicher 37. Über einen zweiten Eingang wird dem Vergleicher 37 ein der Sollposition der Welle 1 entsprechendes Signal φ_{Soll} zugeführt. Das Differenzsignal wird auf zwei Multiplizierer 34, 36 geführt, die das Differenzsignal mit den Ausgangssignalen von zwei Frequenzgeneratoren multiplizieren und nur dann ein Ausgangssignal als Stellsignal an die Torsionsringe 27, 28 liefern, wenn der Vergleicher 37 ein Differenzsignal liefert. Die Bewegungen der Torsionsringe 27, 28 werden nur dann an die Welle 1 weitergegeben, wenn die Magnetkupplung MK 39, 40 eingeschaltet sind, also während der Zeiträume d, a, b bzw. b', a', d' in Fig. 9.

Die Fig. 11 zeigt die Weiterbildung gemäß Fig. 8 in einer Draufsicht.

Die in den Ausführungen laut Fig. 1, 2, 3, 4, 5 und 7 verwendeten Federelemente 4, 5 sind durch die Torsionselemente 41 ersetzt worden. Am Torsionselement 41 greift das flexible Verbindungsstück 12 an. Auf dem flexiblen Verbindungsstück 12 ist der magnetische Antrieb 14 angeordnet. Daß dem Torsionselement 41 gegenüberliegende Ende des flexiblen Verbindungsstücks 12 ist fest mit dem Gehäuse verbunden, so daß sich das Verbindungsstück 12 bei einer Betätigung des magnetischen Antriebs direkt am Gehäuse abstützen kann. Die maximale Schrittweite des Schrittmotors wird durch das Torsionselement 41 festgelegt.

## Patentansprüche

1. Schrittmotor zum Antreiben eines Körpers mit kleinen Drehschritten, enthaltend
- einen Stator und einen zum Drehen des Körpers dienenden Rotor, die mit dem Körper durch Ansteuerung aktiv beweglicher Verbindungen verbindbar sind,
- einen auf den Rotor wirkenden, ansteuerbaren Antrieb, wobei zur Durchführung jeweils eines Drehschrittes die Ansteuerung des Antriebes einerseits und der Verbindung des Rotors mit dem Körper andererseits im wesentlichen während desselben Zeitraumes vorgesehen ist und jeweils nach Durchführung dieses Drehschrittes die Ansteuerung der Verbindung des Stators mit dem Körper erfolgt, um den Körper in der jeweils erreichten Stellung festzuhalten,
dadurch gekennzeichnet,
daß zwischen dem Rotor (2, 9) und dem Stator (3, 8) wenigstens ein der Verdrehung dieser Teile gegeneinander entgegenwirkendes Federelement (4, 5) vorgesehen ist,
das an zwei koaxial zueinander und zum Körper (1) angeordneten Ringen (2, 3) befestigt ist, von denen einer fest mit dem Stator (3, 8) verbunden ist und der andere zusammen mit den Verbindungen, welche den Körper (1) drehen, den Rotor (2, 9) bildet.

2. Schrittmotor nach Anspruch 1, dadurch gekennzeichnet, daß an den Ringen (2, 3) jeweils mindestens ein Arm (10, 11) vorgesehen ist zwischen deren Enden ein flexibles, aktiv verbiegbares Verbindungsstück (12) angeordnet ist.

3. Schrittmotor nach Anspruch 1 oder 2, dadurch gekennzeichnet, daß auf der dem Körper (1) zugewandten Seite der Ringe (2, 3) jeweils mindestens zwei, aktiv bewegliche, Verbindungen (8, 9) vorgesehen sind, die im angesteuerten Zustand mit dem Körper (1) in Verbindung stehen.

4. Schrittmotor nach Anspruch 1 oder 2, dadurch gekennzeichnet, daß auf dem flexiblen Verbindungsstück (12) wie in Anspruch 2 vorgesehen und/oder auf den beweglichen Verbindungen (8, 9) wie in Anspruch 1 vorgesehen jeweils mindestens ein Piezoelement (13) angeordnet ist.

5. Schrittmotor nach Anspruch 1 oder 2, dadurch gekennzeichnet, daß auf das flexible Verbindungsstück (12) wie in Anspruch 2 vorgesehen und/oder auf die beweglichen Verbindungen (8, 9) wie in Anspruch 1 vorgesehen Elektromagnete (14) einwirken.

6. Schrittmotor nach Anspruch 1 oder 2, dadurch gekennzeichnet, daß die einander entgegengesetzt gerichteten axialen Enden der Ringe (2, 3) jeweils wenigstens einen Elektromagnet (15, 16) aufweisen und daß den jeweils wenigstens einem Elektromagnet (15, 16) ein mit dem Körper (1) über ein federndes Teil (18) verbundenes ferromagnetisches Teil (19) gegenübersteht.

7. Schrittmotor nach Anspruch 6, dadurch gekennzeichnet, daß die einander entgegengesetzt gerichteten axialen Enden der Ringe (2, 3) wenigstens zum Teil aus ferromagnetischem Material bestehen, daß die einander entgegengesetzt gerichteten axialen Enden der Ringe (2, 3) jeweils eine Nut (20) aufweisen in der jeweils wenigstens eine Ringwicklung angeordnet ist und daß dem Elektromagneten ein mit dem Körper (1) über ein federndes Teil verbundenes ferromagnetisches Teil (19) gegenübersteht.

8. Schrittmotor nach Anspruch 6, dadurch gekennzeichnet, daß die einander entgegengesetzt gerichteten Enden der Ringe (2, 3) Joche (15) aufweisen, auf denen Wicklungen (16) aufgebracht sind.

9. Schrittmotor nach Anspruch 6, dadurch gekennzeichnet, daß die einander entgegengesetzt gerichteten axialen Enden der Ringe (2, 3) wenigstens zum Teil aus ferromagnetischem Material bestehen und u-förmig ausgebildet sind, und daß auf wenigstens einem Schenkel des U wenigstens eine Wicklung aufgebracht ist.

10. Schrittmotor nach Anspruch 6, dadurch gekennzeichnet, daß an dem Körper (1) zwei membranartige Scheiben (18) senkrecht zur Drehachse des Körpers (1) angeordnet sind, an denen wenigstens ein ferromagnetisches Teil (19) befestigt ist.

11. Schrittmotor nach einem der vorhergehenden Ansprüche, dadurch gekennzeichnet, daß die Federelemente (4, 5) eine große axiale Steifigkeit bei gleichzeitig großer tangentialer Flexibilität aufweisen.

12. Schrittmotor nach Anspruch 4 und 2, dadurch gekennzeichnet, daß das Piezoelement (13) auf dem Verbindungsstück (12) mit einer variablen Spannung ansteuerbar ist.

13. Schrittmotor nach Anspruch 5 und 2, dadurch gekennzeichnet, daß der Elektromagnet (14) auf dem Verbindungsstück (12) mit einer variablen Spannung ansteuerbar ist.

14. Schrittmotor nach Anspruch 6, dadurch gekennzeichnet, daß am Körper (1) membranartige Scheiben (21) und an den Ringen (2, 3) membranartige Ringe (22) befestigt sind, wobei die jeweiligen Membranebenen senkrecht zur Drehachse des Körpers (1) verlaufen.

15. Schrittmotor nach Anspruch 14, dadurch gekennzeichnet, daß die membranartigen Teile (21, 22) im Bereich der Joche (15), einander überlappen.

16. Schrittmotor nach Anspruch 15, dadurch gekennzeichnet, daß die membranartigen Teile (21, 22) aus ferromagnetischem Material bestehen.

17. Schrittmotor nach Anspruch 6, dadurch gekennzeichnet, daß der Elektromagnet (25, 26, 32) am Körper (1) befestigt ist.

## Claims

1. A stepping motor for driving a body through small angles of rotation per step, comprising
- a stator and a rotor used for driving the body, which can be connected with the body by means of controlling actively movable links,
- a controllable drive acting on the rotor, wherein for the purpose of performing respectively one rotary step the control of the drive on the one hand and the link of the rotor with the body on the other hand is essentially provided during the same period of time and wherein, following the completion of this respective rotary step, control of the link of the stator with the body takes place in order to maintain the body in the respectively attained position,
characterized in that
at least one spring element (4, 5) is provided between the rotor (2, 9) and the stator (3, 8), which counteracts the displacement of these parts in respect to each other, and
which is fastened on two rings (2, 3) which are disposed coaxially to each other and to the body, one of which is fixedly connected with the stator (3, 8) and the other of which, together with the links which turn the body (1), constitutes the rotor (2,9).

2. A stepping motor in accordance with claim 1, characterized in that respectively at least one arm (10, 11) is provided on the rings (2, 3), between the ends of which a flexible actively bendable connecting piece (12) is disposed.

3. A stepping motor in accordance with claim 1 or 2, characterized in that on the side of the rings (2, 3) facing the body (1) respectively at least two actively movable connections (8, 9) are provided which in the controlled state are connected with the body (1).

4. A stepping motor in accordance with claim 1 or 2, characterized in that respectively at least one piezo element (13) is respectively disposed on the flexible connecting piece (12) as provided by claim 2 and/or on the movable connections (8, 9) as provided by claim 1.

5. A stepping motor in accordance with claim 1 or 2, characterized in that electromagnets (14) act on the flexible connection piece (12) as provided by claim 2 and/or on the movable connections as provided by claim 1.

6. A stepping motor in accordance with claim 1 or 2, characterized in that the axial ends oriented away from each other of the rings (2, 3) each have at least one electromagnet (15, 16), and that a ferromagnetic part (19), which is connected with the body (1) via a resilient part (18), is located opposite the respectively at least one electromagnet (15, 16).

7. A stepping motor in accordance with claim 6, characterized in that the axial ends oriented away from each other of the rings (2, 3) are at least partially made of a ferromagnetic material, that the axial ends oriented away from each other of the rings (2, 3) respectively have a groove (20) in each of which at least one ring winding is disposed and that a ferromagnetic part (19), which is connected with the body (1) via a resilient part is located opposite the electromagnet.

8. A stepping motor in accordance with claim 6, characterized in that the axial, ends oriented away from each other of the rings (2, 3) have yokes (15), on which windings (16) have been placed.

9. A stepping motor in accordance with claim 6, characterized in that the axial ends oriented away from each other of the rings (2, 3) are made at least partly of a ferromagnetic material and are embodied to be U-shaped, and that at least one winding is disposed on at least one leg of the U.

10. A stepping motor in accordance with claim 6, characterized in that two diaphragm-like disks (18) are disposed on the body (1) perpendicularly to the axis of rotation of the body (1), on which at least one ferromagnetic part (19) is fastened.

11. A stepping motor in accordance with one of the preceding claims, characterized in that the spring elements (4, 5) have great axial rigidity along with simultaneously great tangential flexibility.

12. A stepping motor in accordance with claim 4 and 2, characterized in that the piezo element (13) on the connecting piece (12) can be controlled by a variable voltage.

13. A stepping motor in accordance with claim 5 and 2, characterized in that the electromagnet (14) on the connecting piece (12) can be controlled by a variable voltage.

14. A stepping motor in accordance with claim 6, characterized in that diaphragm-like disks (21) are fastened on the body and diaphragm-like rings (22) are fastened on the rings (2, 3), wherein the respective diaphragm planes extend perpendicularly to the axis of rotation of the body (1).

15. A stepping motor in accordance with claim 14, characterized in that the diaphragm-like parts (21, 22) overlap each other in the area of the yokes (15).

16. A stepping motor in accordance with claim 15, characterized in that the diaphragm-like parts (21, 22) are made of a ferromagnetic material.

17. A stepping motor in accordance with claim 6, characterized in that the electromagnet (25, 26, 32) is fastened on the body (1).

## Revendications

1. Moteur pas à pas destiné à entraîner un corps avec de petits pas de rotation, contenant
- un stator et un rotor servant à faire tourner le corps, qui peuvent être reliés au corps par commande de liaisons mobiles de manière active,
- un dispositif d'entraînement qui peut être commandé et qui agit sur le rotor, la commande du dispositif d'entraînement d'une part et de la liaison du rotor avec le corps d'autre part étant prévue sensiblement pendant le même intervalle de temps pour l'accomplissement de chaque pas de rotation et la commande de la liaison du stator avec le corps se produisant à chaque fois après l'accomplissement de ce pas de rotation, pour maintenir le corps dans la position atteinte dans chaque pas,
caractérisé en ce qu'il est prévu, entre le rotor (2, 9) et le stator (3, 8), au moins un élément à ressort (4, 5) agissant à l'encontre de la rotation de ces pièces l'une par rapport à l'autre, qui est fixé sur deux anneaux (2, 3) agencés coaxialement l'un par rapport à l'autre et par rapport au corps (1), parmi lesquels l'un est lié de manière fixe au stator (3, 8) et l'autre forme le rotor (2, 9) conjointement avec les liaisons qui font tourner le corps (1).

2. Moteur pas à pas selon la revendication 1, caractérisé en ce qu'il est prévu au niveau de chacun des anneaux (2, 3) un ou plusieurs bras (10, 11) entre les extrémités desquels est disposé un élément de liaison (12) flexible, qui peut être déformé de manière active.

3. Moteur pas à pas selon la revendication 1 ou 2, caractérisé en ce qu'il est prévu, sur le côté des anneaux (2, 3) tourné vers le corps (1), dans chaque cas au moins deux liaison (8, 9) mobiles de manière active qui, à l'état commandé, sont en liaison avec le corps (1).

4. Moteur pas à pas selon la revendication 1 ou 2, caractérisé en ce que dans chaque cas au moins un piézoélément (13) est disposé sur l'élément de liaison flexible (12) tel qu'il est prévu dans la revendication 2 et/ou sur les liaisons mobiles (8, 9) telles qu'elles sont prévues dans la revendication 1.

5. Moteur pas à pas selon la revendication 1 ou 2, caractérisé en ce que des électroaimants (14) agissent sur l'élément de liaison flexible (12) tel qu'il est prévu dans la revendication 2 et/ou sur les liaisons mobiles (8, 9) telles qu'elles sont prévues dans la revendication 1.

6. Moteur pas à pas selon la revendication 1 ou 2, caractérisé en ce que les extrémités axiales des anneaux (2, 3) qui sont opposées l'une à l'autre comportent chacune au moins un électroaimant (15, 16) et en ce qu'une pièce ferromagnétique (19) reliée au corps (1) par l'intermédiaire d'une pièce élastique (18) fait face à chaque électroaimant (15, 16).

7. Moteur pas à pas selon la revendication 6, caractérisé en ce que les extrémités axiales des anneaux (2, 3) qui sont opposées l'une à l'autre consistent au moins en partie en matériau ferromagnétique, en ce que les extrémités axiales des anneaux (2, 3) qui sont opposées l'une à l'autre comportent chacune une gorge (20) dans laquelle est disposé dans chaque cas au moins un enroulement torique et en ce qu'une pièce ferromagnétique (19) reliée au corps (1) par l'intermédiaire d'une pièce élastique fait face à l'électroaimant.

8. Moteur pas à pas selon la revendication 6, caractérisé en ce que les extrémités des anneaux (2, 3) qui sont opposées l'une à l'autre comportent des noyaux (15) sur lesquels sont disposés des enroulements (16).

9. Moteur pas à pas selon la revendication 6, caractérisé en ce que les extrémités axiales des anneaux (2, 3) qui sont opposées l'une à l'autre consistent au moins en partie en matériau ferromagnétique et sont en forme de U, et en ce qu'au moins un enroulement est disposé sur au moins une branche du U.

10. Moteur pas à pas selon la revendication 6, caractérisé en ce que, sur le corps (1), sont disposés perpendiculairement à l'axe de rotation du corps (1) deux disques (18) en forme de membrane sur lesquels est fixée au moins une pièce ferromagnétique (19).

11. Moteur pas à pas selon l'une des revendications précédentes, caractérisé en ce que les éléments à ressort (4, 5) présentent une grande rigidité axiale tout en ayant simultanément une grande flexibilité tangentielle.

12. Moteur pas à pas selon les revendications 4 et 2, caractérisé en ce que le piézoélément (13) situé sur l'élément de liaison (12) peut être commandé par une tension variable.

13. Moteur pas à pas selon les revendications 5 et 2, caractérisé en ce que l'électroaimant (14) situé sur l'élément de liaison (12) peut être commandé par une tension variable.

14. Moteur pas à pas selon la revendication 6, caractérisé en ce que des disques (21) en forme de membrane sont fixés sur le corps (1) et des anneaux (22) en forme de membrane sont fixés sur les anneaux (2, 3), les plans respectifs des membranes s'étendant perpendiculairement à l'axe de rotation du corps (1).

15. Moteur pas à pas selon la revendication 14, caractérisé en ce que les pièces (21, 22) en forme de membrane se recouvrent mutuellement dans le domaine des noyaux (15).

16. Moteur pas à pas selon la revendication 15, caractérisé en ce que les pièces (21, 22) en forme de membrane consistent en matériau ferromagnétique.

17. Moteur pas à pas selon la revendication 6, caractérisé en ce que l'électroaimant (25, 26, 32) est fixé au corps (1).
